(19) Europäisches Patentamt

European Patent Office

Office européen des brevets

(11) **EP 1 732 085 A1**

(12) **EUROPEAN PATENT APPLICATION**

(43) Date of publication:
**13.12.2006 Bulletin 2006/50**

(51) Int Cl.:
**G21C 17/06** (2006.01)   **G01T 3/00** (2006.01)
**G01N 23/204** (2006.01)

(21) Application number: **05105134.0**

(22) Date of filing: **10.06.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **Atomic Energy Council - Institute of
Nuclear
Energy Research
Lungtan, Taoyuan,
Taiwan (TW)**

(72) Inventors:
- **Tsao, Cheng-Si
  Taoyuan County 325 (R.O.C.)
  Taoyuan (TW)**
- **Perng, Kang-Neng
  367, Taiwan(R.O.C.)
  Miaoli County (TW)**
- **Lin, Tang-Yi
  Taoyuan County 335
  Taoyuan County (TW)**

- **Hsieh, Ming-Tsung
  300, Taiwan (R.O.C.)
  Hsinchu City (TW)**
- **Yung, Ming-Chen
  Taiwan (R.O.C.)
  Jhongli City (TW)**
- **Hwang, Kang-Lin
  367, Taiwan (R.O.C)
  Taoyuan (TW)**
- **Fang, Hsin-Fa
  802, Taiwan (R.O.C.) (TW)**
- **Cheng, Shih-Chung
  Taipei County 231, Taiwan
  Xindian City (TW)**
- **Lin, Kin-Fu
  Taipei City (TW)**

(74) Representative: **Beck, Michael Rudolf
  Beck & Rössig
  European Patent Attorneys
  Cuvilliésstrasse 14
  81679 München (DE)**

(54) **Method and apparatus for non-destructive examination using neutron backscattering**

(57)    The present invention processes a non-destructive examination on a spent-fuel storage rack by neutron rays to identify the existence and the depletion of a boron plate in the rack as utilizing an examination apparatus coordinated with a nuclear module system and a speed-controllable crane.

FIG.1

Printed by Jouve, 75001 PARIS (FR)

## Description

### FIELD OF THE INVENTION

The present invention relates to an examination apparatus; more particularly, relates to a non-destructive examination which, by neutron rays, is used for measuring the distribution of a neutron absorption material (such as boron) or a low atomic number material (such as oil and water), for detecting the integrity of a boron neutron absorption material in the wall of a spent-fuel storage rack in a nuclear power plant, and for a quantitative measurement of the size of a defect; and, relates to the non-destructive examination to be used at the bottom of the fuel pool in spite of its high radiation environment.

### DESCRIPTION OF THE RELATED ARTS

As disclosed in US patent No.3,035,174, a first prior art comprises a high-energy neutron source; means for supporting the neutron source for bombarding the adjacent wall aperture formation with a high-energy neutron; means spaced from the neutron source for detecting the delayed radiation resulting from the formation; and means including a recorder for recording the intensity of the delayed radiation and its relative height in the wall aperture. In addition, a method for the first prior art comprises moving the neutron source for bombarding the adjacent wall aperture formation with the high-energy neutron; after breaking off the bombardment from the high-energy neutron source, a gamma radiation is detected; and the period and energy of the radiation as well as its relative position in the wall aperture are recorded. Thus, the thickness of oxygen in the formation can be obtained by calculating with the information detected.

As disclosed in US patent No.3,035,174, a second prior art is provided as a system for logging a well bore, comprising a neutron source substantially free of gamma radiation; a gamma-radiation detector spaced from the neutron source; means for shielding the detector from direct radiation from the neutron source; means for moving the detector along the well bore trailing the neutron source to detect delayed gamma radiation after breaking off the bombardment from the neutron source; energy discriminating means connected to the detector for producing a signal proportional to radiation from aluminum 28 produced by neutrons from the neutron source; energy discriminating means connected to the detector for producing a signal proportional to radiation from sodium 24 produced by neutrons from the neutron source; and means for recording the ratio of the signals from the detector as a function of depth within the well bore. The second prior art also discloses the system for logging formations penetrated by a well bore, comprising a radiation source for bombarding earth materials of various formation occurring along the well bore with high-energy neutron radiation to produce a first group of altered nuclei from aluminum atoms in material of formations and to produce a second group of altered nuclei from silicon atoms in material of the formations; means including gamma-radiation detector for separately sensing delayed gamma radiation from the first group and the second group; and means for individually registering the intensities of the delayed gamma radiation as functions of depth of the formations in the well bore. Thus, the formations of the earth materials can be obtained from the recorded signals.

The prior arts stated above use detectors to detect delayed gamma radiation after emitting neutron radiation, which is for obtaining formations of the earth materials yet is not for detecting defects in the structure and, more importantly, not for being used at the bottom of the fuel pool and in an environment of high radiation. So, the prior arts do not fulfill users' requests on actual use.

### SUMMARY OF THE INVENTION

Therefore, the main purpose of the present invention is to confirm the existence of a boron plate in a wall of a spent-fuel storage rack in a nuclear power plant before the rack starts storing spent fuel rods with high radioactivity; after a rack starts using, to detect the integrity and continuity of the boron plate periodically or at times when there is any difficulty in processing a destructive examination; and, to quantitatively measure the size of the defect found in the boron plate.

To achieve the above purpose, the present invention is a method and an apparatus for a backscatter neutron non-destructive examination. The apparatus comprises a neutron source (Cf-252) and four sets of components consisting of a $BF_3$ neutron detector, a preamplifier and a shielding boron board. The apparatus further comprises a water-repellent chamber with a square wall, a sheathing covered on the top end surface of the wall, a guiding head covered on the bottom end surface of the wall, and a plug seat with a tip having a mount for the neutron source, where the neutron source and the four sets of components are in the water-repellent chamber and the neutron detectors are set on walls in four directions.

The present invention also provides a method for using the apparatus stated above. A non-destructive examination is processed under the water level of the fuel pool in the nuclear power plant by neutron rays as utilizing the apparatus coordinated with a nuclear module system and a speed-controllable crane so that the distribution, depletion and defects of the boron plate (the neutron absorption material) in the wall of the spent-fuel storage rack in the nuclear power plant can be identified. Or, after the rack starts using, the boron plate can be detected for its integrity and continuity periodically or at times when there is any difficulty on processing a destructive examination. Or, the size of the defect found in the boron plate can be measured quantitatively.

When operating, the water-repellent chamber is put into a to-be-detected cell of the rack to process a scanning vertically, where a large amount of fast neutrons is emitted to all directions by the neutron source at the center of the chamber. When the fast neutrons enter into the water around the cell, they are moderated into thermal neutrons. A part of the thermal neutrons is backscattered back to the original chamber to be detected by the neutron detector. The status of the neutrons passing through the tested object (the boron plate in the wall of the cell) is recorded and outputted by a nuclear module recorder. Because the thermal neutrons are absorbed and attenuated on the backscattering path when passing through the boron-containing wall of the cell, the output of counting rate of the thermal neutrons can be interpreted as an occurrence of a loss of the boron plate or a gap in the cell at a relative position, or can be used to confirm the integrity and the existence of the boron plate. Accordingly, a method and an apparatus for a backscatter neutron non-destructive examination can be obtained.

BRIEF DESCRIPTIONS OF THE DRAWINGS

The present invention will be better understood from the following detailed descriptions of the preferred embodiments according to the present invention, taken in conjunction with the accompanying drawings, in which

FIG.1    is a view of components of an examination apparatus according to the present invention;

FIG.2A    is a top view of a sheathing of a chamber according to the present invention;

FIG.2B    is a top view and a side view of a guiding head at the bottom of a chamber according to the present invention;

FIG.2C    is a top view and a side view of a neutron source fixed on a mount of a plug seat according to the present invention;

FIG.3    is a location view of the components of an operating system according to the present invention;

FIG.4    is a view showing a method for detecting according to the present invention;

FIG.5A    is a view of a first scanning result diagram according to the present invention;

FIG.5B    is a view of a second scanning result diagram according to the present invention;

DESCRIPTION OF THE PREFERRED EMBODIMENT

The following descriptions of the preferred embodiments are provided to understand the features and the structures of the present invention.

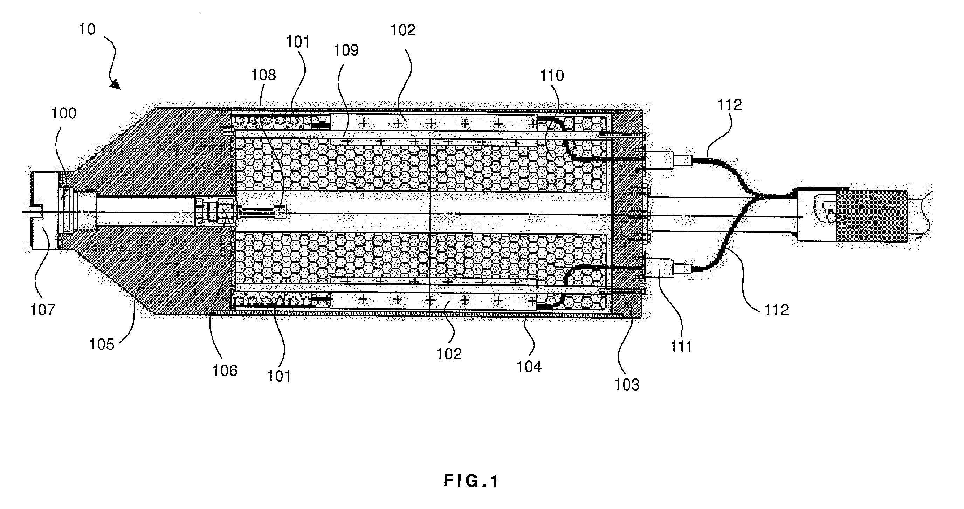

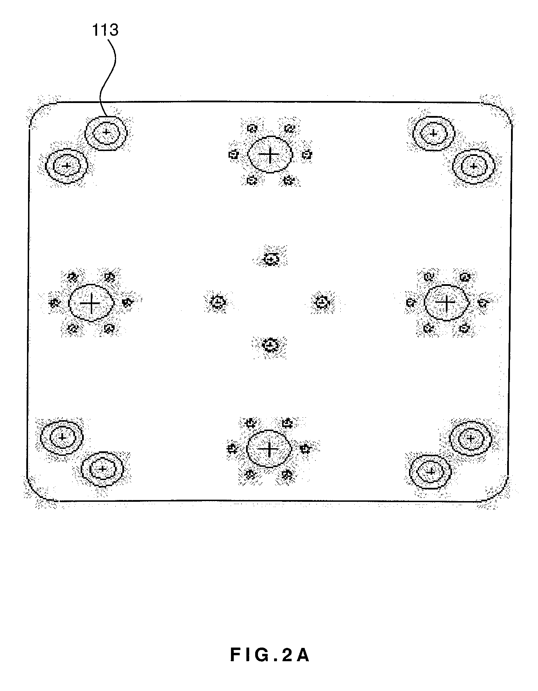

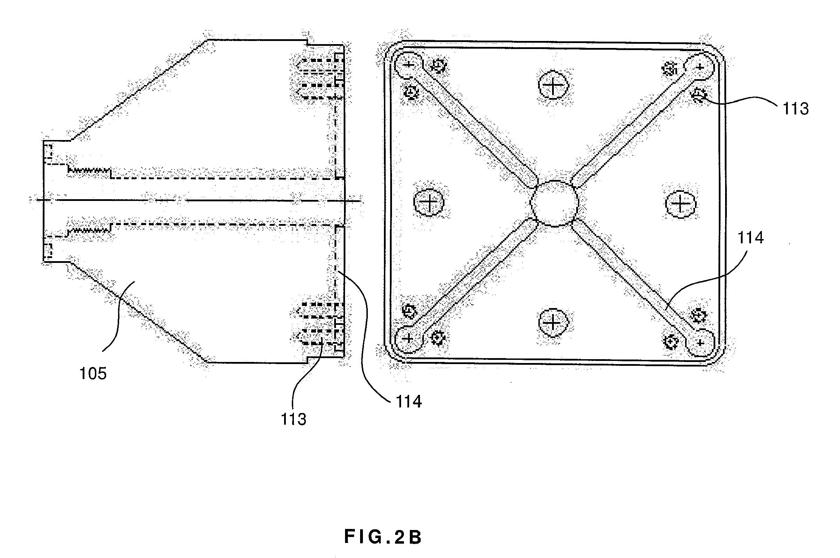

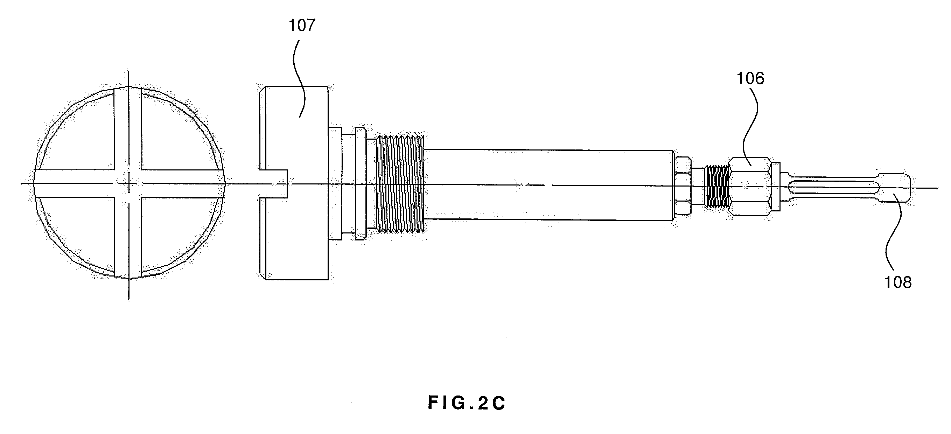

Please refer to FIG.1 till FIG.2C, which are a view of components of an examination apparatus, a top view of a sheathing of a chamber, a top view and a side view of a guiding head fixed at the bottom of a chamber, and a top view and a side view of a neutron source fixed on a mount of a plug seat, according to the present invention. As shown in the figures, the present invention is a method and an apparatus for a backscatter neutron non-destructive examination. The apparatus comprises a neutron source 108 and four sets of components consisting of a BF$_3$ neutron detector 101, a preamplifier 102 and a shielding boron board 110. Therein, the neutron source 108 is a radionuclide of Cf-252 and its radiation activity is at least 20 millicuries; the effective areas of the neutron source 108 and the neutron detector 101 are on the same water level; and, the neutron detector 101 is bar-shaped with a length of effective area of 2.5cm.

The apparatus according to the present invention further comprises a chamber 10 which comprises a slurry wall 104 with two end surfaces, a sheathing 103 covered on top end surface of the wall 104, a guiding head 105 covered on the bottom end surface of the wall 104, and a plug seat 107 with a mount 106 and a tip tightly covering the bottom end surface of the guiding head 105 by whirling. Therein, the plug seat 107 and the guiding head 105 are sealed up together with an O-ring 100 for water repellence; the neutron source 108 is deposed on the mount 106 of the plug seat 107; the chamber 10 contains the neutron source 108 and the four sets of components consisting of the neutron detector 101, the preamplifier 102 and the shielding boron board 110; the shielding boron board 110 is inserted into a guiding trough 114 on top of the guiding head 105 and the guiding trough is cross-shaped; eight copper connection bars 109 are equally dispersed at four corners of the sheathing 103; the connection bars 109 are whirled to be tightened to a screw thread 113 of the guiding head 105 to obtain the sealed-up chamber 10 while sealing up the wall 104, the sheathing 103 and the guiding head 105 together; and, except that the wall 104 is made of a Zr alloy, the other components are made of aluminum. Hence, rays of fast neutron are emitted by the neutron source 108; the fast neutrons are then moderated into thermal neutrons in the water around; a part of them are backscattered after passing through a boron plate (a tested object) while an absorption reaction may happen in the boron plate; then that part of neutrons is transmitted to be detected by the neutron detector 101 and signals from the neutron detector 101 are outputted for analyzing the distribution and the size of defects of the boron plate in the wall 104 of the tested object in a rack (not shown in the figures).

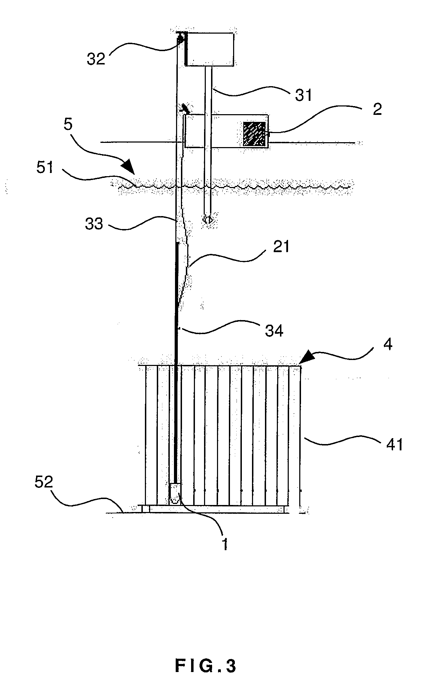

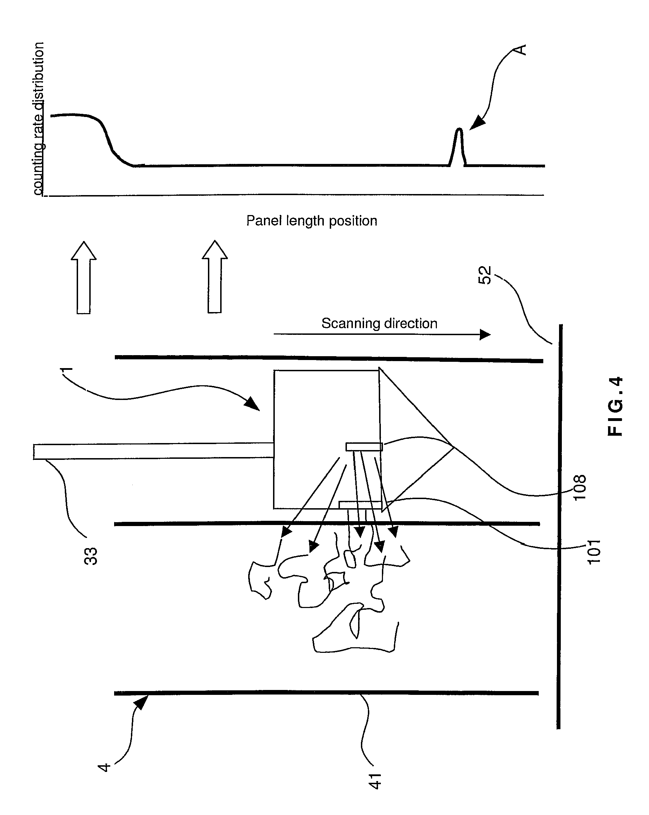

Please refer to FIG.3 and FIG.4, which are a location view of the components of an operating system and a view showing a method for detecting, according to the present invention. A method for the apparatus 1 according to the present invention comprises the following steps:

(a) To obtain a nuclear module system 2 in a bridge crane 31, which comprises a signal magnifier (not shown in the figures), a single channel analyzer (not shown in the figures), a counter (not shown in the figures), a ratemeter (not shown in the figures), and a multi-channel recorder (not shown in the figures).

(b) To obtain a crane set 3 which comprises a speed-controllable crane 32, a sling 33 and a pole 34. The speed-controllable crane 32 is connected to the pole 34 by the sling 33 and the pole 34 is connected with the apparatus 1, so that the speed-controllable crane 32 can control the vertical speed of the apparatus 1.

(c) To lower the apparatus 1 to a position of 2 meters under a water level 51 in a fuel pool 5 and to make the apparatus 1 stay standing-by so that the environmental radiation dose is in the range of a safety area to keep people safe. The apparatus 1 is connected with a signal cable 112 by a repellent coaxial cable joint 111. The nuclear module system 2 is connected to a $BF_3$ neutron detector 101 with a high-voltage power cable 21; and is connected with a wire for receiving output signals from the neutron detector 101. The neutron detector 101, a preamplifier 102 and a shielding boron board 110 are formed as a set and four of the sets are located in the chamber 10 in four different directions and the neutron detector 101 simultaneously detects panels 41 of a cell in the four directions at a height of a storage rack 4.

(d) To increase setup values for a working voltage of the neutron detector 101, a low discrimination level of the single channel analyzer, and an amplification factor of the signal magnifier.

(e) To revise the moving speed of the speed-controllable crane 32 and the output speed of the multi-channel recorder.

(f) To move the nuclear module system 2 and the apparatus 1 horizontally by the bridge crane 31 to a position over the top of a cell of the spent-fuel storage rack 4 to be detected.

(g) To lower the apparatus 1 at a fast speed of 2m/min from the top of the cell till its base 52 to detect backscattered thermal neutrons by the neutron detector 101 which is connected to the multi-channel recorder and is turned on to detect a neutron intensity of the backscattered neutron rays at a relative position of height of the panel 41 in the call of the rack 4 to obtain a distribution diagram (as shown in FIG.4), where the thermal neutrons are obtained from high-energy neutrons backscattered, which are emitted by the neutron source 108 and are reacted with the tested object. A peak (labeled as 'A' in FIG.4) showing a sudden increase of the neutron intensity on the distribution diagram indicates something happens at that relative height, which can be a loss of a boron plate, a depletion of the boron plate or a gap in the cell.

(h) And, to detect different cells by repeating step (a) till step (g).

Therein, the scanning action and the speed of the chamber 10 in the rack 4 of the fuel pool 5 are controlled by the speed-controllable crane 32; and the speed is selected from a fast speed and a slow speed. The fast speed is a speed of 2m/min (meter per minute) and is the default speed used in a general scanning; and, the slow speed is a speed of 5cm/min (centimeter per minute) and is the speed used in a relative height indicated by the peak of the neutron intensity shown on the distribution diagram.

When using the apparatus 1, a scanning is done in a fast speed while fast neutron rays are produced by the neutron source 108 to be emitted to all directions from the camber 10. The fast neutrons are then moderated into thermal neutrons by the water in the nearby area of the cell; and a part of the thermal neutrons are backscattered to the neutron detector 101 to be examined. During the backscattering, when the thermal neutrons are passing through the wall 41 of the cell, some are absorbed by the boron plate (a neutron absorption material) of the cell and the attenuation of the rays occurs. Later on, outputs from the neutron detector 101 are processed by the nuclear module system 2 and are turned into integral current signals to be outputted by the multi-channel recorder so that a distribution diagram of neutron intensity with relative heights is obtained. Therein, the strength of the signal shows the neutron intensity measured; and, the relative height indicated by the peak shown on the distribution diagram of neutron intensity indicates a loss of the boron plate, a depletion of the boron plate, or a gap in the cell. And then, the apparatus 1 can process the scanning again at the relative height and the changes in the outputs of neutron intensity can be used to indicate qualitatively and quantitatively the existence, integrity, and defects of the boron plate at the relative height. Since the length of the effective area of the neutron detector 101 is 2.5cm, the size of a defect can be calculated according to the following formula (applied to the slow-speed scanning, 5cm/min):

$$W = 2.5 \times \frac{\left(C_{gap} - C_{att}\right)}{\left(C_{un} - C_{att}\right)}.$$

In the above formula, 'W' is the width of the gap (in a 'cm' scale); $C_{gap}$ is the counting rate caused by the gap; $C_{un}$ is the counting rate outside the panel 41 of the rack (i.e. a position with no boron plate); and, $C_{att}$ is the counting rate at a regular position inside the panel (i.e. a position with a whole boron plate). But, if the defect is wider or equal to 2.5cm, the counting rate of the neutrons (i.e. the neutron intensity as well as the strength of the output signal) will be equal to the neutron intensity with no attenuation (i.e. the counting rate outside the panel 41 of the rack).

Consequently, by the examination apparatus coordinated with the nuclear module system and the crane set having the speed-controllable crane, the existence, integrity, and defects of the boron plate in the spent-fuel storage rack of the nuclear power plant is detected and examined under the water level 51 of the fuel pool so that the continuous existence and integrity of the boron plate in the wall of the cell can be assured before the rack is operated to store spent fuels; or, the continuous existence and integrity of the boron plate can be detected and examined periodically; or, when any defect in the boron plate is found, the size of the defect can be measured quantitatively.

As a result, the present invention uses a neutron detector to measure the intensity attenuation of the backscatter neutrons moderated from rays of high-energy neutron so that the distribution, depletion and defects of a tested boron plate can be obtained. When operating, a water-repellent chamber is put into a to-be-detected cell of a storage rack to process a scanning vertically, where a large amount of high-energy neutrons (fast neutrons) is emitted to all directions by a neutron source (Cf-252) at the center of a chamber. The fast neutrons will not affect the detection of $BF_3$ thermal neutrons, and will not be absorbed and attenuated easily by the tested boron plate (the tested object) of the cell. When the fast neutrons enter into the water around the cell, they are moderated (or 'heated') into thermal neutrons. A part of the thermal neutrons is backscattered back to the original chamber to be detected by the neutron detector, where the thermal neutrons are absorbed and attenuated on the backscattering path when passing through the boron-containing wall of the cell. The status of the neutrons passing through the tested object is recorded and outputted by a nuclear module recorder. When a loss, a gap defect or an obvious depletion occurs in the boron material (plate-like) of the wall, a sudden increase in an output of counting rate (i.e. an intensity) of the thermal neutrons can be interpreted as an occurrence of the loss of the boron plate, the depletion of the boron plate or the gap in the cell at the relative position for the measurement. But, an output of a counting rate lower than 25% (as compared to the counting rate without boron's absorption) is usually used to identify the integrity of the boron plate.

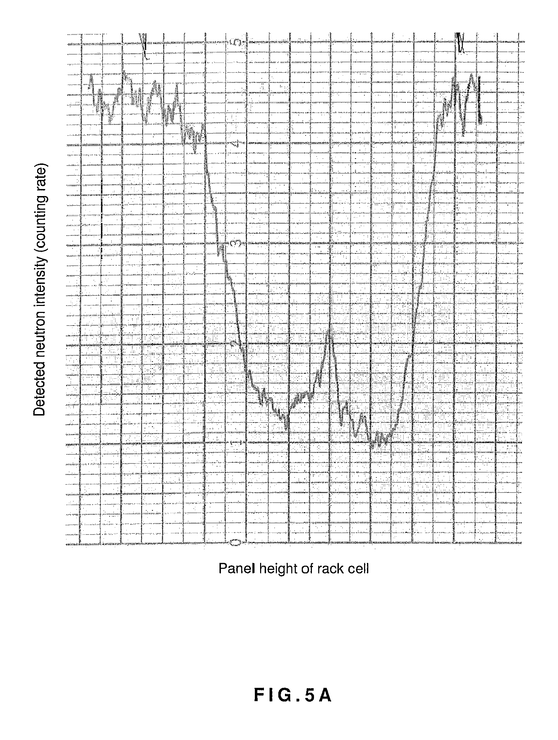

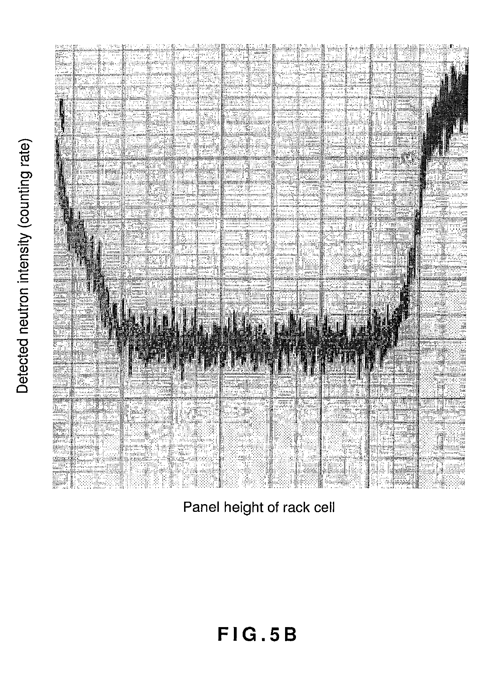

The experiment for the present invention disclosed here includes a test to a boron plate with a 2cm gap of defect and another boron plate without any defect in an experimental water pool. Please refer to FIG.5A and FIG.5B, which are views of a first scanning result diagram and a second one according to the present invention. In the test resulting in the first scanning result diagram, a general scanning in a fast speed of 2m/min is done to the boron plate having a 2cm gap of defect; and the result diagram is shown in FIG.5A where the vertical axis is the value of neutron intensity and the horizontal axis is the scanning height. Similarly, a scanning in the same way is done to another boron plate of the same kind yet without any defect; and the result diagram is shown in FIG.5B where the vertical axis and the horizontal axis are the same as those in FIG.5A for a comparison in between. As shown in both of FIG.5A and FIG.5B, a steep descending in the neutron intensity occurs after starting from the top of the water pool, where the apparatus meets a boron plate. The descending means a weakening of the neutron intensity owing to an absorption reaction. And, a steep ascending appears at the right, where the apparatus leaves the boron plate. In FIG.5A, a peak is occurred in the area of low neutron intensity (in the middle), where the apparatus finds a defect of 2cm in the middle of the boron plate. Hence, it shows that the apparatus can find a 2cm defect at a general speed of 2m/min.

To sum up, the present invention of a method and an apparatus for a backscatter neutron non-destructive examination produces fast neutrons where some thermal neutrons can be obtained after the fast neutrons react with a tested object and the water around. Thermal neutrons backscattered to the neutron detector are then detected and signals are outputted to be analyzed so that the existence and the depletion of the boron plate in the wall of the spent-fuel storage rack are identified.

The preferred embodiments herein disclosed are not intended to unnecessarily limit the scope of the invention. Therefore, simple modifications or variations belonging to the equivalent of the scope of the claims and the instructions disclosed herein for a patent are all within the scope of the present invention.

## Claims

1. An apparatus for a backscatter neutron non-destructive examination, comprising:

   - a neutron source emitting neutrons;
   - at least one BF3 neutron detector detecting backscatter thermal neutrons;
   - at least one preamplifier amplifying signals outputted by said neutron detector; and
   - at least one shielding boron board for preventing said neutron detector from being exposed to irradiation of neutron rays from other than a tested object.

2. The apparatus according to claim 1, wherein said neutron source is a radionuclide of Cf-252 and radiation activity of said neutron source is at least 20 millicuries.

3. The apparatus according to claim 1 or 2, wherein an effective area of said neutron source and an effective area of said BF3 neutron detector are on a same water level.

4. The apparatus according to one of claims 1 to 3, wherein said BF3 neutron detector is bar-shaped with a length of effective area of 2.5cm.

5. The apparatus according to one of claims 1 to 4, further comprising:

- a wall, a slurry wall, with two end surfaces;
- a sheathing covering on one of said two end surfaces;
- a guiding head covering on the other one of said two end surfaces; and
- a plug seat comprising a mount with a tip, said plug seat covered on an end surface of said guiding head opposite to said wall,

wherein said wall, said sheathing and said guiding head are sealed up together to form a chamber;
wherein said neutron source is deposed on said mount; and
wherein said neutron source, said BF3 neutron detector, said preamplifier and said shielding boron board are located in said chamber.

6.  The apparatus according to claim 5,
    wherein said shielding boron board is inserted into a guiding trough at an end of said guiding head opposite to said tip; and
    wherein said guiding trough is cross-shaped.

7.  The apparatus according to claim 5 or 6, wherein said BF3 neutron detector, said preamplifier and said shielding boron board are formed as a set and four said sets are located in said chamber in four different directions.

8.  The apparatus according to one of claims 5 to 7, wherein said chamber is comprised with eight connection bars equally dispersed at four corners of said sheathing to be whirled to tighten said chamber to a screw thread of said guiding head to obtain water repellence while sealing said plug seat and said guiding head with an O-shaped ring.

9.  The apparatus according to one of claims 5 to 8, wherein said examination apparatus is connected with an externally-exposed signal cable by a repellent coaxial cable joint.

10. The apparatus according to one of claims 5 9, wherein said examination apparatus is water-repellent.

11. A method for a backscatter neutron non-destructive examination, comprising:

    (a) Deposing a nuclear module system in a bridge crane, said nuclear module system comprising a signal magnifier, a single channel analyzer, a counter, a ratemeter and a multi-channel recorder;
    (b) Obtaining a crane set, said crane set comprising a speed-controllable crane, a sling and a pole, said speed-controllable crane controlling a vertical speed of a examination apparatus, said sling connecting to said pole, said pole connecting to said examination apparatus;
    (c) Lowering said examination apparatus at a position of 2 meters under a water level in a fuel pool to stay in a standby status;
    (d) Increasing setup values of a working voltage of a BF3 neutron detector, a low discrimination level of said single channel analyzer, and an amplification factor of said signal magnifier;
    (e) Revising moving speed of said speed-controllable crane and output speed of said multi-channel recorder;
    (f) Moving said nuclear module system by said bridge crane horizontally to a position over a cell of a spent-fuel storage rack; and
    (g) Lowering said examination apparatus continuously to detect backscatter neutron rays by said BF3 neutron detector connected to a multi-channel recorder until a base of said cell is reached,

wherein said multi-channel recorder is turned on to detect a neutron intensity of said backscatter neutron rays to obtain a distribution diagram of relative positions of height in said cell,
wherein a peak of a sudden increase in said neutron intensity shown on said distribution diagram indicates an occurrence at said relative height, said occurrence selected from a group consisting of a loss of a boron plate in said cell, a depletion of said boron plate and a gap in said cell.

12. The method according to claim 11, wherein said nuclear module system is connected to said neutron detector with a high-voltage power cable and with a wire for receiving output signals from said neutron detector.

13. The method according to claim 11 or 12, wherein said BF3 neutron detector, said preamplifier and said shielding boron board are formed as a set and four of said sets are located in said chamber in four different directions and said BF3 neutron detector simultaneously detects panels in said four different directions at a height in said cell.

14. The method according to one of claims 11 to 13, wherein said examination apparatus detects said cell at a speed; and
    wherein, at said relative height which is indicated by said peak shown on said distribution diagram, said cell is examined by said examination apparatus at a slower speed than said speed to obtain a distribution diagram different from said distribution diagram to show size of a leak of said boron plate at said relative height.

FIG.1

**FIG.2A**

**FIG.2B**

FIG.2C

**FIG.3**

FIG.4

Panel height of rack cell

**FIG. 5A**

Detected neutron intensity (counting rate)

Panel height of rack cell

FIG.5B

**European Patent Office**

## EUROPEAN SEARCH REPORT

Application Number

EP 05 10 5134

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/018802 A1 (CRAIG RICHARD A ET AL) 27 January 2005 (2005-01-27) * paragraphs [0063] - [0065], [0070], [0072], [0078], [0079], [0084] - [0086], [0091] * | 1-4 | G21C17/06 G01T3/00 G01N23/204 |
| X | GB 2 340 229 A (* BRITISH NUCLEAR FUELS PLC) 16 February 2000 (2000-02-16) * page 3 - page 4 * * page 9, paragraph 3 - page 10, last paragraph; figures * | 1-4 | |

TECHNICAL FIELDS SEARCHED (IPC)

G21C
G01T
G01N

~~The present search report has been drawn up for all claims~~

| Place of search | Date of completion of the search | Examiner |
|---|---|---|
| The Hague | 28 September 2005 | Savage, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

Application Number

EP 05 10 5134

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-4

**European Patent Office**

**LACK OF UNITY OF INVENTION**
**SHEET B**

Application Number

EP 05 10 5134

The Search Division considers that the present European patent application does not comply with the requirements of unity of invention and relates to several inventions or groups of inventions, namely:

1. claims: 1-4

    Apparatus for backscatter non-destructive neutron examination
    ---

2. claims: 5-9

    A sealed chamber with a guiding head
    ---

3. claims: 11-14

    Method of operating an examination apparatus
    ---

## ANNEX TO THE EUROPEAN SEARCH REPORT
## ON EUROPEAN PATENT APPLICATION NO.

EP 05 10 5134

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2005

| Patent document cited in search report | | Publication date | Patent family member(s) | | Publication date |
|---|---|---|---|---|---|
| US 2005018802 | A1 | 27-01-2005 | AU<br>WO | 6104801 A<br>0184183 A2 | 12-11-2001<br>08-11-2001 |
| GB 2340229 | A | 16-02-2000 | NONE | | |

EPO FORM P0459

For more details about this annex : see Official Journal of the European Patent Office, No. 12/82

**EP 1 732 085 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3035174 A